# EUROPÄISCHE PATENTANMELDUNG

(11) **EP 2 258 488 A2**
(43) Veröffentlichungstag der Anmeldung: **08.12.2010**
(21) Anmeldenummer: 10164292.4
(22) Anmeldetag: 28.05.2010
(51) Int. Cl.: B06B 1/10, B07B 1/42, B65G 27/12, B65G 27/30

(54) **Antriebsanordnung für einen länglichen Schwingkörper**

(30) Priorität: 05.06.2009 DE 102009024308
(71) Anmelder: Hoerger, Hans, 89567 Sontheim (DE); Trapp, Georg, 89431 Baechingen (DE)
(72) Erfinder: Hoerger, Hans, 89567 Sontheim (DE); Trapp, Georg, 89431 Baechingen (DE)
(74) Vertreter: Schmid, Wolfgang

(57) **Zusammenfassung**

Die Erfindung betrifft eine Antriebsanordnung für einen länglichen Schwingkörper (20, 20'), der sich von mehreren drehangetriebenen Kurbelschwingen (21, 21') mit zueinander parallelen Drehachsen auf einer vorgebbaren Schwingbahn bewegen lässt, wobei die Kurbelschwingen (21, 21') gelenkig mit dem Schwingkörper (20, 20') gekoppelt sind. Erfindungsgemäß sind die Kurbelschwingen (21, 21') zur Erzeugung einer nicht umlaufenden Schwingbewegung unter selbsttätiger Drehrichtungsumkehr über einen festgelegten Schwenkwinkel angetrieben und zwei benachbarte Kurbelschwingen (21, 21') der Antriebsanordnung sind paarweise im einem Längenabschnitt des Schwingkörpers (20, 20') angeordnet und jeweils über einen Zwischenlenker (23, 23') mit einem gemeinsamen Lagerungsbereich des Schwingkörpers (20, 20') gekoppelt.

## Beschreibung

Die Erfindung betrifft eine Antriebsanordnung für einen länglichen Schwingkörper, der sich von mehreren drehangetriebenen Kurbelschwingen mit zueinander parallelen Drehachsen auf einer vorgebbaren Schwingbahn bewegen lässt, wobei die Kurbelschwingen gelenkig mit dem Schwingkörper gekoppelt sind.

Eine derartige Antriebsanordnung ist z.B. bei einer Sortiermaschine in der DE 10 2006 033 573 A1 bereits offenbart. Mit der Antriebsanordnung werden als längliche Schwingkörper mehrere nebeneinander angeordnete Rüttelkörper relativ zueinander auf- und abwärts bewegt, auf die das zu sortierende Schüttgut von oben aufgegeben werden kann. Da die Rüttelkörper an ihrer Oberseite mit einer Vielzahl von Durchtrittsöffnungen versehen sind, fallen kleine z.B. körnige Bestandteile durch die Rüttelkörperöffnungen hindurch nach unten und die größeren Teile werden von den Rüttelkörpern insbesondere in deren Längenrichtung transportiert. An seinen beiden Enden ist der Rüttelkörper jeweils vom Hebel einer Kurbelschwinge geführt, durch deren umlaufende Rotationen die rüttelnde Auf- und Abwärtsbewegung des zugehörigen Rüttelkörpers erzeugt wird. Die Rüttelkörper sind durch die Rüttelkräfte in Verbindung mit den ruckartigen Stoßbelastungen durch Auffüllen des zu sortierenden Schüttgutes und anschließendes Abwerfen der Fraktionen hoch belastet und entsprechend verschleißanfällig. Die Gefahr von häufigen Betriebsstörungen und von übermäßigem Verschleiß soll dabei durch weitestmögliche Reduzierung der seitlichen Abstände zwischen den benachbarten Rüttelkörpern gemildert sein. Diese Maßnahme ist jedoch nur wirksam, wenn jeder Rüttelkörper der Sortiermaschine sehr biege-, verwindungssteif und dabei relativ maßhaltig gestaltet ist. Das führt zu hohen Fertigungskosten und einem hohen Eigengewicht der Rüttelkörper. Infolge des hohen Eigengewichts ist zudem auch eine entsprechend hohe Antriebsleistung für dessen Rüttelantrieb erforderlich.

Der Erfindung liegt daher die Aufgabe zugrunde, eine Antriebsanordnung für einen länglichen Schwingkörper der eingangs genannten Art zu schaffen, mit der eine Überdimensionierung des Schwingkörpers zur Sicherstellung von dessen Dauerhaltbarkeit vermieden werden kann.

Gemäß der Erfindung wird diese Aufgabe durch Bereitstellung einer Antriebsanordnung für einen länglichen Schwingkörper mit den Merkmalen von Patentanspruch 1 gelöst. Vorteilhafte Ausgestaltungen und Weiterbildungen der Erfindung sind in den abhängigen Ansprüchen angegeben.

Der Grundgedanke der Erfindung basiert auf der Überlegung, dass der Schwingkörper in dem Endbereich, in dem die Antriebskräfte für den Schwingantrieb in den Schwingkörper eingeleitet werden, z.B. durch Biegewechselspannungen und ähnliche kritische Kräfte mechanisch besonders hoch beansprucht wird und dass sich die Beanspruchung des Schwingkörpers in diesem Bereich durch eine stabile Abstützung und präzise Führung über die zugeordneten Elemente der Antriebsanordnung deutlich reduzieren lässt. Hierzu wird der Lagerungsbereich des Schwingkörpers jeweils unter Vermittlung von einem Zwischenlenker gleichzeitig über zwei Kurbelschwingen abgestützt, deren Drehachsen einen ausreichenden Abstand voneinander aufweisen. Somit ergibt sich durch den Verbund aus zwei Kurbelschwingen und zugeordneten Zwischenlenkern eine sehr breite und damit entsprechend stabile Abstützbasis für den angetriebenen Endbereich des Schwingkörpers mit einer Art von Dreiecksverbund. Außerdem wird die Antriebsbewegung sehr harmonisch und abgesehen von der Drehrichtungsumkehr in den Endlagen völlig ruckfrei in den zur Anlenkung der beiden Zwischenlenker dienenden Lagerungsbereich des Schwingkörpers eingeleitet. Durch die somit schonende Krafteinleitung werden der Schwingkörper sowie seine Antriebsmechanik nur in relativ geringem Maß beansprucht, so dass der Schwingkörper mit entsprechend geringer Antriebsleistung bewegt werden kann. Im einfachsten Fall kann mit der erfindungsgemäßen Antriebsanordnung ein einziger Schwingkörper bewegt werden, der als relativ breite Schwingplatte ausgebildet ist. Bei einer entsprechend breiten Schwingplatte ist es zweckmäßig, wenn auf beiden gegenüberliegenden Seiten eine Abstützung der Schwingplatte über synchron bewegte Kurbelschwingen und Zwischenlenker vorgesehen wird. Eine solche Schwingplatte könnte z.B. ein Schwingboden einer Maschine sein, entlang dem ein Schüttgut gefördert werden soll. Auch könnte die Schwingplatte als Schubboden einer Maschine oder eines Nutzfahrzeugs ausgebildet sein. Bei komplexeren Systemen kann der Schubboden eines Nutzfahrzeugs auch drei oder mehr Schwingkörper umfassen, die relativ zueinander bewegt werden können, wobei in einem solchen komplexen System auch mindestens eine starre Platte vorhanden sein kann.

Neben einer Anwendung der erfindungsgemäßen Antriebsanordnung bei Schubboden kann die Technologie insbesondere unter Verwendung mehrerer relativ zueinander bewegbarer Schwingkörper bei Maschinen und Anlagen auch in der Land- und Forstwirtschaft zum Einsatz kommen, die zum Sortieren, Sieben, Fördern und Trennen von Wert- und Reststoffen sowie sonstigen Stoffen und Materialien vorgesehen sind. Unabhängig vom Einsatzzweck, kann bei der erfindungsgemäßen Antriebsanordnung vermieden werden, dass im Nahbereich des Schwingkörpers umlaufend rotierende Maschinenelemente ungeschützt angeordnet sind. Hierdurch entfällt das Risiko von Betriebsstörungen der Maschine oder Anlage durch flexible Fördergüter, wie Bänder, Schnüre, Folien oder dgl., die das rotierende Maschinenelement umschlingen bzw. umwickeln und damit abbremsen oder vollständig blockieren können.

Vorzugsweise können die geometrischen Drehachsen der am Schwingkörper gelagerten Enden der beiden Zwischenlenker koaxial angeordnet sein, wodurch der Lagerungsbereich auf eine einzige Lagerstelle konzentriert werden kann. Eine konstruktiv besonders einfache Gestaltung wird dabei möglich, wenn die Zwischenlenker auf einem gemeinsamen Achsbolzen in einem Lagerbock des Schwingkörpers schwenkbar gelagert werden.

Der festgelegte Schwenkwinkel der Kurbelschwingen liegt im Bereich von 1 bis etwas weniger als 180 Grad, insbesondere im Bereich von 25 bis 45 Grad und beträgt vorzugsweise ungefähr 30 Grad. Der maximale Schwenkwinkel der beiden Kurbelschwingen zwischen ihren Endlagen wird jeweils auf etwas weniger als 180 Grad festgelegt, damit auch bei ungünstiger Toleranzlage der Streckwinkel der Kurbelschwingen von 180 Grad nicht überschritten werden kann. Hierdurch lässt sich in Verbindung mit einer geeigneten Geometrie der zwei Kurbelschwingen und der zugehörigen Zwischenlenker auf einfache Weise ein zuverlässiger Zwanglauf des Stangengetriebes sicherstellen.

Falls die Antriebsanordnung zu einer Maschine oder Anlage mit mehreren seitlich nebeneinander angeordneten Schwingkörpern gehört, lassen sich die Schwingkörper vorzugsweise jeweils über ein zugeordnetes Kurbelschwingenpaar antreiben.

Eine in Längsrichtung des Schwingkörpers besonders kompakte Anordnung der Kurbelschwingenpaare ergibt sich, wenn die Kurbelschwingenpaare zueinander höhenversetzt angeordnet werden. Damit die Bauhöhe im Bereich der Kurbelschwingenpaare hierbei nicht zu groß wird, kann das in der oberen Ebene angeordnete Kurbelschwingenpaar über entsprechend verkürzte Zwischenlenker mit dem zugehörigen Schwingkörper gekoppelt sein. Damit sich die Winkelverhältnisse dadurch gegenüber den längeren Zwischenlenkern des unteren Kurbelschwingenpaares nicht wesentlich ändern, kann der Abstand der Drehachsen des oberen Kurbelschwingenpaars gegenüber dem Drehachsenabstand beim unteren Kurbelschwingenpaar entsprechend verkürzt sein.

Alternativ kann vorgesehen sein, dass die Drehachsen der paarweise in verschiedenen Höhenebenen angeordneten Kurbelschwingen auf einem Teilkreis angeordnet sind, dessen Mittelpunkt der Mittelpunkt einer Lochscheibe einer Exzenterwelle ist.

Alternativ können die Kurbelschwingenpaare benachbarter Schwingkörper etwa auf gleicher Höhe liegend hintereinander angeordnet werden. Dies wird besonders zweckmäßig sein, wenn für die Kurbelschwingenpaare in Längsrichtung des Schwingkörpers ein ausreichender Anordnungsraum zur Verfügung steht, die Bauhöhe der Gesamtanordnung aber möglichst gering gehalten werden soll. Die Zwischenlenker können hierbei eine übereinstimmende Länge aufweisen, was im Hinblick auf deren Herstellungskosten und die Ersatzteilhaltung besonders kostengünstig ist. Dies ist jedoch nicht unbedingt erforderlich.

Bei mehreren nebeneinander angeordneten Schwingkörpern, die synchron bewegt werden sollen, können die zugehörigen, in einer Querreihe liegenden Kurbelschwingen zur Vereinfachung des Antriebsstrangs vorteilhaft zu einer durchgehenden Kurbelwelle miteinander verbunden sein. Sind dabei in einer vorteilhaften, jedoch nicht zwangsweise erforderlichen Weiterbildung zwei Gruppen von gegeneinander bewegbaren Schwingkörpern vorhanden, so werden die Kurbelwellen beider Gruppen vorzugsweise gegenläufig antriebsgesteuert. Hierdurch lässt sich infolge des Ausgleichs der Schwungmassen ein besonders ruhiger Lauf der Maschine oder Anlage erzielen.

Eine besonders robuste und funktionssichere Antriebssteuerung der Kurbelwellen ist durch eine mechanische Antriebssteuerung über Exzentergetriebe möglich, wobei über jedes der beiden Exzentergetriebe mittels einer Exzenterwelle ein Kurbelwellenpaar angetrieben wird. Dabei können die Exzenterwellen der beiden Exzentergetriebe bei einer Ausführung in einem Abstand nebeneinander koaxial angeordnet und über eine Verbindungswelle oder dgl. drehfest miteinander verbunden sein. Von den beiden Exzenterwellen steht außenseitig jeweils ein achsparalleler Exzenterbolzen ab, an dem jeweils zwei pleuelähnliche Steuerhebel angelenkt sind. Die entgegengesetzten Enden der beiden Steuerhebel sind jeweils über eine Kurbelschwinge gelenkig mit der zugehörigen Kurbelwelle verbunden. Über den Umlauf des Exzenterbolzens wird somit ein entsprechender Vorschub der Steuerhebel mit Richtungswechsel in seinen Endlagen erzeugt, der in eine Schwenkbewegung der angelenkten Kurbelschwingen umgewandelt wird. Die Exzenterwellen können dabei so verstellbar sein, dass bedarfsgerecht unterschiedliche Schwingkurven erzeugt werden können. Für einen Antrieb der über die zwangläufigen Exzentergetriebe bewegten Schwingkörper ist außerdem nur ein einziger drehender Antriebsmotor wie z.B. ein elektrischer Getriebemotor erforderlich.

Weniger Einbauraum in Breitenrichtung der Maschine ist demgegenüber erforderlich, wenn die Exzenterwellen der beiden Exzentergetriebe in Längsrichtung des Schwingkörpers gesehen hintereinander angeordnet werden. Vorteilhaft können die beiden Exzenterwellen dabei mittels eines flexiblen Antriebselementes wie einer Kette oder eines Zahnriemens schlupffrei miteinander drehgekoppelt sein, wobei das Antriebselement zweckmäßig gleichzeitig das Transmissionsmittel des rotierenden Antriebsmotors bilden kann. Als rotierender Antriebsmotor wäre neben einem Elektromotor auch z.B. ein Hydraulikmotor geeignet.

Insbesondere wenn die Exzentergetriebe zur Anpassung an unterschiedliche Förderaufgaben z.B. durch Verstellung der Exzenterbolzen gegenüber ihrer Exzenterwelle einstellbar sind, kann es wünschenswert sein, dass die Hebelgeometrie von Steuerhebel und Kurbelschwingen mit der Hebelgeometrie der zugehörigen Zwischenhebel und deren Kurbelschwingen übereinstimmen. Hierdurch ergibt an beiden Stellen ein vergleichbarer Bewegungsablauf, der auf der Antriebsseite problemlos beobachtet werden kann. Durch entsprechende Maßnahmen, beispielsweise durch Verwendung von Langlochverstellungen, kann die Verstellung der Exzenterbolzen gegenüber ihrer Exzenterwelle auch stufenlos erfolgen.

Je nach den weitergehenden Einsatzbedingungen der Maschine oder Anlage mit der erfindungsgemäßen Antriebsanordnung kann es geboten sein, anstelle eines oder mehrerer rotierender Antriebsmotoren, mehrere Linearantriebe zum Schwenkantrieb der Kurbelschwingen bzw. Kurbelwellen zu nutzen. Solche Linearantriebe können z.B. doppeltwirkende Hydraulik bzw. Pneumatikzylinder oder auch unter Längenänderung richtungsumkehrbar arbeitende elektromotorische Stellantriebe sein. Hierbei wird der lineare Vorschub des Linearantriebs auf einfache Weise mittels einer Kurbelschwinge in eine Hin- und Her-Drehbewegung der zugehörigen Kurbelwelle umgewandelt, die mit einer entsprechenden Verschwenkung der dadurch angetriebenen Kurbelschwingen einhergeht.

Durch entsprechende wechselseitige Ansteuerung bzw. Umsteuerung der Linearantriebe, die entgegengesetzt zu bewegenden Schwingkörpern zugeordnet sind, ist es auch hierbei möglich, die Kurbelwellen beider Gruppen gegenläufig anzutreiben. Hierdurch lässt sich auch bei Linearantrieben infolge des Ausgleichs der Schwungmassen ein besonders ruhiger Lauf der Maschine bzw. Anlage erzielen.

Damit sich Verbindungsleitungen zu den Linearantrieben mit geringer Leitungslänge problemlos verlegen und anschließen lassen, ist eine Reihenanordnung der Linearantriebe zweckmäßig. Diese Reihenanordnung kann je nach den Platzverhältnissen der Maschine bzw. Anlage durch Anordnung der Linearantriebe seitlich des Schwingkörpers nebeneinander, oder in Längsrichtung des Schwingkörpers hintereinander oder durch Kombination dieser Reihen erfolgen.

Vorteilhafte Ausführungsformen der Erfindung sind in den Zeichnungen dargestellt und werden nachfolgend beschrieben.

Dabei zeigen:
- Fig. 1: eine schematische Seitenansicht eines Schwingkör- pers, der von einer Antriebsanordnung mit paarweise angeordneten Kurbelschwingen über Zwischenlenker angetrieben ist,
- Fig. 2: eine schematische Seitenansicht von zwei nebenein- ander angeordneten Schwingkörpern, die von einer Antriebsanordnung mit jeweils zwei paarweise ange- ordneten Kurbelschwingen auf unterschiedlicher Höhe angetrieben sind,
- Fig. 3: eine perspektivische Schrägansicht auf den Endbe- reich der Schwingkörper nach Fig. 2, deren An- triebsanordnung eine Exzentersteuerung umfasst,
- Fig. 4: eine schematische Seitenansicht einer geänderten Antriebsanordnung mit paarweise hintereinander an- geordneten Kurbelschwingen,
- Fig. 5: eine perspektivische Schrägansicht auf die An- triebsanordnung gemäß Fig. 4 mit dem Lagerungsbe- reich der Kurbelwellen,
- Fig. 6: die Schrägansicht auf den Lagerungsbereich der Kur- belschwingen nach Fig. 5 mit zugeordneten Exzenter- wellen,
- Fig. 7: die Schrägansicht nach Fig. 6 bei vollständig mon- tiertem Exzentergetrieben und Antriebsmotor mit flexiblem Antriebselement,
- Fig. 8: eine Antriebsvariante mit zwei Antriebsmotoren für die hintereinander angeordneten Exzentergetriebe,
- Fig. 9: eine perspektivische Schrägansicht auf den Endbe- reich eines Schwingkörpers, der von einer Antriebs- anordnung mit in Reihe hintereinander angeordneten Linearantrieben angetrieben ist, und
- Fig. 10: eine perspektivische Schrägansicht auf den Endbe- reich von zwei Schwingkörpern, die von einer An- triebsanordnung mit in Reihe hintereinander und in Reihe nebeneinander angeordneten Linearantrieben angetrieben sind.

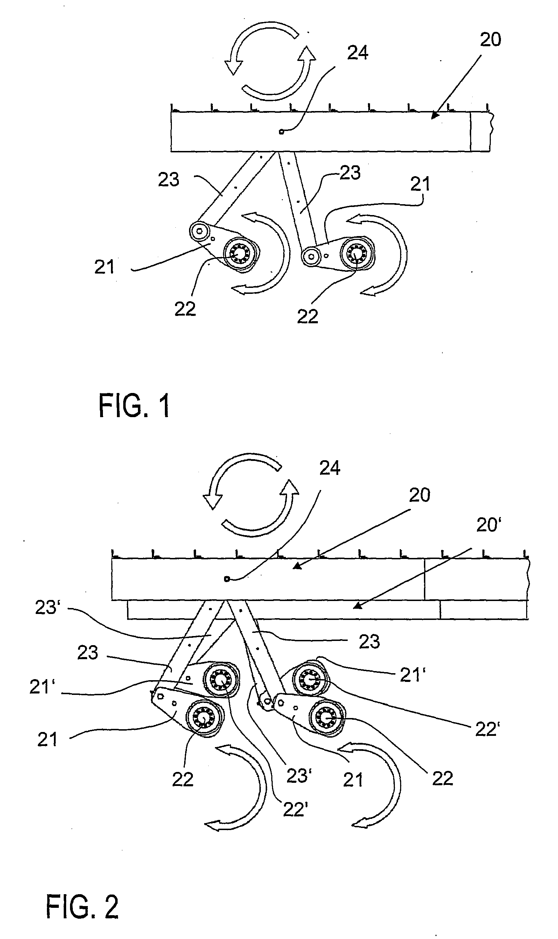

Eine in Fig. 1 nur teilweise gezeigte Antriebsanordnung eines länglichen Schwingkörpers 20, der z.B. ein Schüttelkörper einer Schüttgut-Förderanlage sein kann, umfasst im sichtbaren Endbereich des Schwingkörpers 20 zwei Kurbelschwingen 21, die jeweils zu einer Kurbelwelle 22 gehören sowie zwei Zwischenlenker 23, durch welche die Enden der Kurbelschwingen 21 jeweils gelenkig mit dem Schwingkörper 20 verbunden sind. Die Schwingebene der Kurbelschwingen 21 liegt dabei in der gleichen Ebene wie der rechteckförmige Hohlquerschnitt des an der Unterseite offenen Schwingkörpers 20 und die oberen Enden der Zwischenlenker 23 ragen von unten in den Hohlquerschnitt des Schwingkörpers 20 hinein. Innerhalb des Hohlquerschnitts sind die Enden der Zwischenlenker 23 auf einem Achsbolzen 24 gelagert, der ihre Lageraugen sowie den Schwingkörper 20 quer durchsetzt. Beide Zwischenlenker 23 sind somit über den Achsbolzen 24 an einer zentralen Lagerstelle gelenkig mit dem Schwingkörper 20 verbunden.

Die mit ihrer geometrischen Drehachse quer zur Schwingebene der Zwischenlenker 23 verlaufenden Kurbelwellen 22 sind in einem Abstand voneinander und in Längsrichtung des Schwingkörpers 20 gesehen hintereinander angeordnet. Dabei sind die Kurbelwellen 22 auf gleicher Höhe angeordnet, wobei die Drehachse einer der Kurbelwellen 22 vor und die der anderen hinter dem Achsbolzen 24 liegen. Hierdurch lassen sich die Kurbelschwingen 21, wie durch gebogene Doppelpfeile angedeutet ist, über einen Schwenkwinkelbereich von 1 bis nahezu 180 Grad gleichsinnig und richtungsumkehrbar antreiben. Hierdurch werden die unteren Enden der Zwischenlenker 23 von ihrer Kurbelschwinge 21 entlang einem Kreisbahnabschnitt nach oben bzw. unten bewegt und erzeugen einen entsprechenden Vorschub ihres Zwischenlenkers 23. Aufgrund der etwa horizontalen Mittelstellung der auf der Zeichnung rechten Kurbelschwinge 21 führt der Vorschub des rechten Zwischenlenkers 23 überwiegend zu einer Aufwärts- bzw. Abwärtsbewegung des Schwingkörpers 20 während der Vorschub des linken Zwischenlenkers 23 aufgrund der schräg geneigten Mittelstellung der Kurbelschwinge 21 eine stärkere Vorschubkomponente in Längsrichtung des Schwingkörpers 20 erzeugt. Entsprechend der Resultierenden dieser beiden Vorschübe der Zwischenlenker 23 ergibt sich die vorgebbare Schwingbahn des Schwingkörpers 20, die ebenfalls durch Richtungspfeile angedeutet ist und beispielsweise in Form einer Hin- und Her- Schwingbewegung und/oder einer im Wesentlichen kreisförmigen und/oder im Wesentlichen elliptischen Schwingbewegung und/oder durch Mischformen umgesetzt werden kann. Die Bewegungen der Kurbelschwingen 21 werden sozusagen nach innen auf den Schwingkörper 20 kopiert. Da die Kurbelwellen 22 synchron im gleichen Richtungssinn angetrieben werden, schließen die beiden Zwischenlenker 23 in jeder Momentanstellung einen ausreichend großen Winkel ein, um über eine Art Dreiecksverbund eine stabile Abstützung an den Kurbelschwingen 21 und somit über die nicht sichtbare Lagerung der Kurbelwellen 22 am Gestell der Anlage sicherzustellen. Alternativ können die Kurbelwellen 22 auch auf unterschiedlichen Höhen angeordnet werden, wobei die Ausführungen der Kurbelschwingen 21 und der Zwischenlenker 23 entsprechend angepasst werden.

Damit der Schwingkörper 20 in der gezeigten, etwa horizontalen Ausgangsstellung gehalten ist, muss er an seinem entgegengesetzten, nicht sichtbaren Endbereich ebenfalls gelenkig mit dem Gestell verbunden sein, darf aber die gewünschte Antriebsbewegung des Schwingkörpers 20 nicht behindern. Dies kann z.B. auf einfache Weise erreicht werden, indem im Endbereich des Schwingkörpers 20 eine weitere Anlenkstelle mittels eines Achsbolzens vorgesehen wird, über welche der Schwingkörper 20 mit einer Kurbelschwinge und ggf. einem Zwischenlenker am Gestell der Anlage gelagert wird. Die Kurbelschwinge an dieser Lagerungsstelle könnte dann z.B. über eine Koppelstange mit einer der beiden Kurbelschwingen 21 im gezeigten Endbereich gekoppelt sein, um eine Parallelverschiebung des Schwingkörpers 20 nach Art eines Parallelogrammgestänges zu ermöglichen. Je nach der angestrebten Schwingbewegung der Schwingkörper 20 kann deren antriebsferner Endbereich auch über eine andere Kinematik gelenkig gelagert sein.

Zur Vereinfachung der Beschreibung sind bei den nachfolgenden Figuren bereits beschriebene Bauelemente mit den gleichen Bezugszeichen versehen und lediglich im Hinblick auf die Unterschiede zu Fig. 1 näher erläutert.

In Fig. 2 ist ein weiterer baugleicher Schwingkörper 20' unmittelbar neben dem anderen Schwingkörper 20 angeordnet, wobei die Schwingkörper 20 und 20' beim Fördervorgang des Schüttgutes relativ zueinander bewegt werden. Zum Schwingantrieb des in der Zeichnung hinteren Schwingkörpers 20' ist eine modifizierte Antriebsanordnung mit einem weiteren Paar sich achsparallel zu den Drehachsen der Kurbelwellen 22 erstreckender Kurbelwellen 22' vorhanden. Die Drehachsen dieser Kurbelwellen 22' liegen jedoch in einem Höhenabstand oberhalb der Drehachsen der beiden Kurbelwellen 22. Außerdem ist der Abstand zwischen den Drehachsen der beiden Kurbelwellen 22' deutlich geringer als der Abstand zwischen den Drehachsen der beiden Kurbelwellen 22.

Die Kurbelschwingen 21' der Kurbelwellen 22' weisen die gleiche Schwinglänge auf wie die Kurbelschwingen 21, jedoch sind die Zwischenlenker 23' zur Anpassung an die geänderte Geometrie entsprechend verkürzt. Die oberen Enden dieser verkürzten Zwischenlenker 23' sind über einen nicht sichtbaren Achsbolzen 24 in gleicher Weise gelenkig an ihren zugeordneten Schwingkörper 20 angeschlossen wie die Zwischenlenker 23.

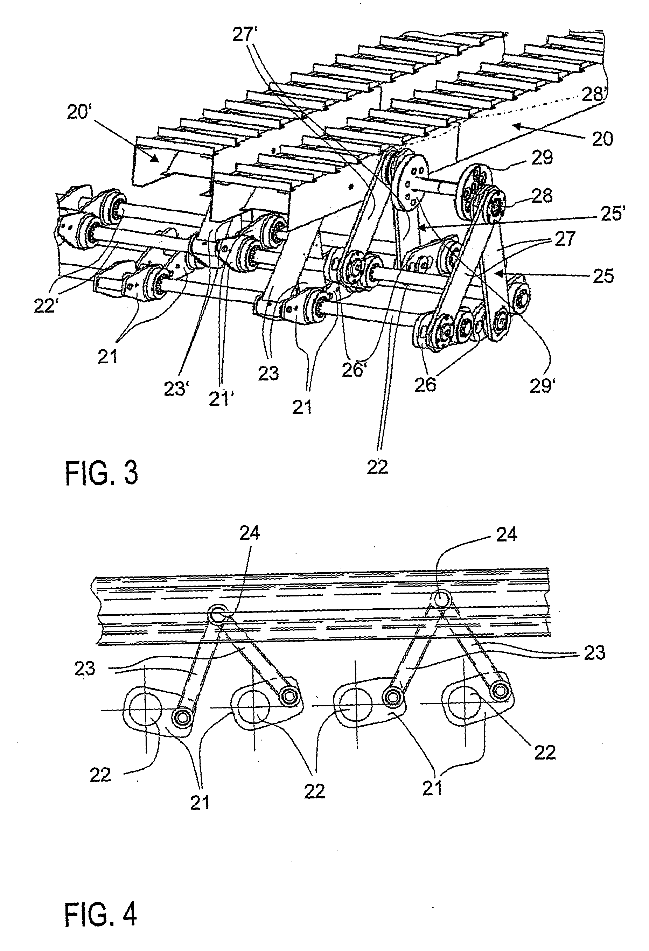

In Fig. 3 lässt sich eine Antriebssteuerung der benachbarten Schwingkörper 20 und 20' für paarweise auf unterschiedlicher Höhe angeordneten Kurbelschwingen 21 und 21' über eine kompakte Exzentersteuerung erkennen, deren Exzentergetriebe 25 und 25' seitlich neben dem rechten Schwingkörper 20 der Anlage angeordnet sind. Die Exzentergetriebe 25 und 25' dienen dem Zweck, eine gegenläufige Zwangssteuerung der in entgegengesetzten Richtungen anzutreibenden Schwingkörper 20 und 20' sicherzustellen. Dazu sind alle in einer Richtung anzutreibenden Schwingkörper 20 über die Zwischenlenker 23 mit den Kurbelschwingen 21 der unteren Kurbelwellen 22 bewegungsgekoppelt, während die in entgegengesetzter Richtung anzutreibenden Schwingkörper 20' über die kürzeren Zwischenlenker 23' mit den Kurbelschwingen 21' der oberen Kurbelwellen 22' bewegungsgekoppelt sind. Die unteren Kurbelwellen 22 sind bis zu einer Schwingebene des rechten äußeren Exzentergetriebes 25 verlängert und im Endbereich jeweils mit einer Kurbelschwinge 26 versehen. Diese Kurbelschwingen 26 fluchten in ihrer Drehstellung jeweils zu den anderen Kurbelschwingen 21 der zugehörigen Kurbelwelle 22. An den Hebeln der Kurbelschwingen 26 ist jeweils das untere Ende eines Steuerhebels 27 schwenkbar gelagert. Die oberen Enden der beiden geraden Steuerhebel 27 laufen spitzwinklig aufeinander zu und sind am oberen Ende gemeinsam auf einem Exzenterbolzen 28 gelagert, der axial von der Außenseite einer runden Lochscheibe einer Exzenterwelle 29 absteht. Das Lochbild der Lochscheibe weist in radialer Erstreckungsrichtung mehrere Gewindebohrungen auf, in die sich der als Gewindebolzen ausgebildete Exzenterbolzen 28 hineindrehen lässt, wenn eine Hubverstellung gewünscht wird. Alternativ kann zur Umsetzung einer stufenlosen Verstellung beispielsweise eine entsprechende nicht dargestellte Langlochverstellung vorgesehen werden. Im Anschluss an die Lochscheibe verjüngt sich die Exzenterwelle 29 auf einen Wellenstumpf. Der Wellenstumpf ist mit einem Wellenstumpf einer in entgegengesetzter Richtung koaxial angeordneten Exzenterwelle 29' drehfest verbunden, so dass diese synchron drehen. Von der Außenseite der Exzenterwelle 29' steht ebenfalls ein zylindrischer Exzenterbolzen 28' ab, wobei der Exzenterbolzen 28' etwa diametrisch entgegengesetzt zum Exzenterbolzen 28 vom oberen Bereich der Lochscheibe des Exzenterbolzens 28' absteht. Somit befindet sich der Exzenterbolzen 28' momentan in seiner oberen und der Exzenterbolzen 28 in seiner unteren Endlage. Werden die Exzenterwellen 29 und 29' um 180 Grad gedreht, verhält es sich genau umgekehrt. Da am Exzenterbolzen 28' die oberen Enden von zwei Steuerhebeln 27' angelenkt sind, deren untere Enden jeweils gelenkig mit einer Kurbelschwinge 26' einer der Kurbelwellen 22' verbunden sind, werden die Kurbelwellen 22 und 22' stets in entgegengesetzter Richtung um einen entsprechenden Winkel hin und her gedreht, was aufgrund der Kinematik zu gegenläufigen Bewegungen der beiden Schwingkörper 20 und 20' führt. Die Steuerhebel 27' weisen dabei die gleiche Länge auf wie die Zwischenlenker 23' und die Steuerhebel 27 die gleiche Länge wie die Zwischenlenker 23. Darüber hinaus ist eine Einstellmöglichkeit des Schwenkwinkels der Kurbelschwingen 21, 21', 26 und 26' gegeben, da diese über ihre Länge mindestens zwei weitere, einander gegenüberliegende Schraublöcher zur Befestigung der das untere Ende des Zwischenlenkers 23 bzw. 23' oder Steuerhebels 27 bzw. 27' durchdringenden Kurbelachse aufweisen.

Bei der in Fig. 4 gezeigten Antriebsanordnung sind zwei jeweils paarweise angeordnete Kurbelschwingen 21 für zwei gegenläufig anzutreibende, benachbarte Schwingkörper 20 und 20' in deren Längsrichtung gesehen hintereinander angeordnet. Die geometrischen Drehachsen aller vier zugehörigen Kurbelwellen 22 liegen somit in einer Höhenebene.

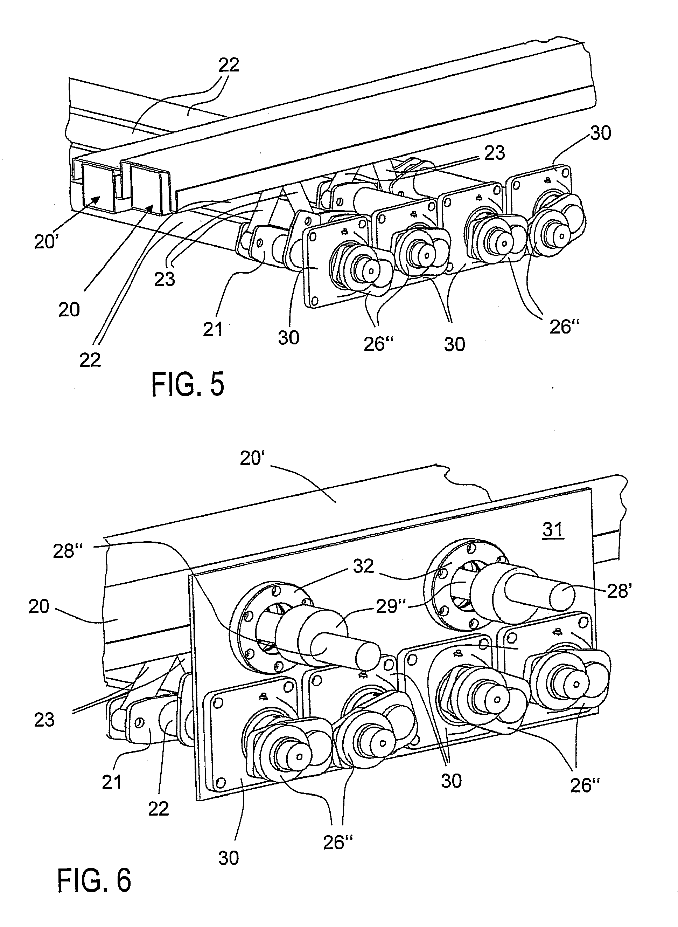

Wie in Verbindung mit der perspektivischen Darstellung nach Fig. 5 zu erkennen ist, sind die vier Kurbelwellen 22 seitlich neben dem Schwingkörper 20 in jeweils einer von vier Lagerkonsolen 30 drehbar am Gestell der Anlage gelagert. Aus der Lagerbohrung der Lagerkonsolen 30 ragt jeweils ein Wellenstumpf heraus, auf dem eine Kurbelschwinge 26" mitdrehsicher befestigt ist.

Wie in Verbindung mit Fig. 6 ersichtlich ist, lassen sich die Lagerkonsolen 30 auf einer sich in Längsrichtung der Anlage senkrecht und parallel zur Längserstreckung des Schwingkörpers 20 verlaufenden Tragwand 31 eines Maschinengehäuses lösbar befestigen. Diese Tragwand 31 ist rechteckförmig ausgebildet und deutlich höher als die daran befestigten Lagerkonsolen 30. In einem Abstand oberhalb der Lagerkonsolen 30 ist die Tragwand 31 von zwei weiteren, runden Lagerkonsolen 32 durchsetzt, in denen jeweils eine Exzenterwelle 29" drehbar gelagert ist. Die linke der runden Lagerkonsolen 32 ist dabei mittig über dem linken Paar der Lagerkonsolen 30 und die rechte Lagerkonsole 32 mittig über dem rechten Paar der Lagerkonsolen 30 angeordnet. Von der runden Stirnseite der Exzenterwellen 29" steht jeweils ein runder Exzenterbolzen 28" ab, der sich parallel zur Drehachse der Exzenterwelle 29" und damit auch achsparallel zu den Kurbelwellen 22 erstreckt. Der Exzenterbolzen 28" der linken Exzenterwelle 29" befindet sich wie auch die Kurbelschwingen 26" der beiden linken Kurbelwellen 22 in seiner unteren Endlage. Demgegenüber befinden sich die Kurbelschwingen 26" der beiden rechten Kurbelwellen 22 in ihrer oberen Endlage und der Exzenterbolzen 28" der rechten Exzenterwelle 29" hierzu passend in der oberen Endlage.

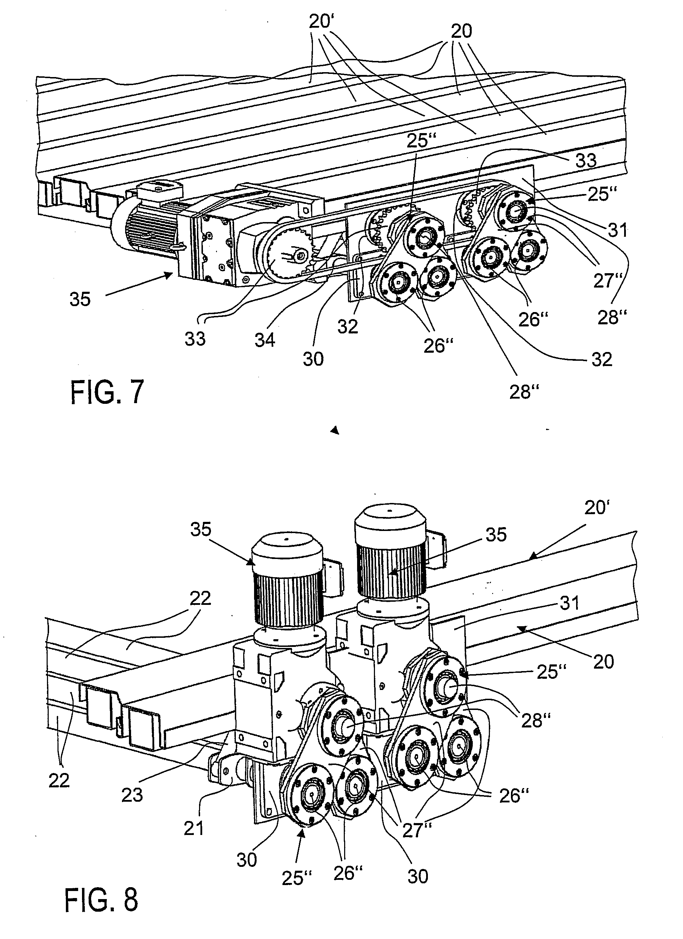

Wie in Verbindung mit der Darstellung in Fig. 7 zu sehen ist, sind die Exzenterbolzen 28" jeweils über zwei Steuerhebel 27" gelenkig mit den beiden zugeordneten Kurbelschwingen 26" verbunden, so dass die umlaufende Drehbewegung des Exzenterbolzens 28" in einen Auf- und Abwärtshub der angeschlossenen Steuerhebel 27" und somit in eine entsprechende Hin- und Her-Drehbewegung der zugeordneten Kurbelwellen 22 umgewandelt wird. Damit sichergestellt ist, dass die beiden hintereinander angeordneten Exzentergetriebe 25" exakt gegenläufig arbeiten, sind sie schlupffrei in gegenläufiger Stellung drehgekoppelt. Zur Drehkoppelung der beiden Exzenterwellen 29" dreht sich mit jeder der Exzenterwellen 29" ein Zahnrad 33, wobei die beiden Zahnräder 33 von einem flexiblen Antriebsmittel wie einem Zahnriemen 34, einer Gliederkette oder dgl. umschlungen werden. Motorisch angetrieben wird der Zahnriemen 34 von einem elektrischen Getriebemotor 35, der in einem Abstand vor der Tragwand 31 quer zu dieser gehalten ist, wobei das von seiner Abtriebswelle getragene Zahnrad 33 in einer Ebene und Reihe zu den beiden anderen Zahnrädern liegt. Bei korrekter Montage des Zahnriemens 34 werden die beiden Exzentergetriebe 25" somit also synchron gegenläufig angetrieben. Da der Getriebemotor 35 gegenüber der Tragwand 31 nicht nach oben übersteht, ergibt sich eine in Höhenrichtung der Anlage gesehen kompakte Bauweise der gesamten Antriebsanordnung. Alternativ wäre es jedoch auch möglich, den Getriebemotor 35 oberhalb der Exzentergetriebe 25" mit senkrechter statt horizontaler Motorwellenachse anzuordnen. Hierdurch ist zwar in diesem Bereich ein größerer Platzbedarf in Höhenrichtung der Anlage gegeben, jedoch kann der Getriebemotor 35 in einem deutlich größeren Abstand zu den Schwingkörpern 20 und somit dem zu transportierenden Schüttgut angeordnet werden.

Anstelle eines einzigen Getriebemotors 35 können zum Antrieb der beiden Exzentergetriebe 25" auch zwei jeweils ein Exzentergetriebe 25" antreibende Getriebemotoren 35 vorgesehen werden, wie in Fig. 8 gezeigt ist. Durch entsprechende Ansteuerung der Getriebemotoren 35 kann z.B. der Grad der Gegenläufigkeit der Exzentergetriebe 25" modifiziert werden oder im Extremfall ein Gleichlaufbetrieb der beiden Exzentergetriebe 25" eingestellt werden. Dies kann beispielsweise zur effizienten Förderung von Schüttgütern mit extrem unterschiedlicher Konsistenz vorteilhaft sein.

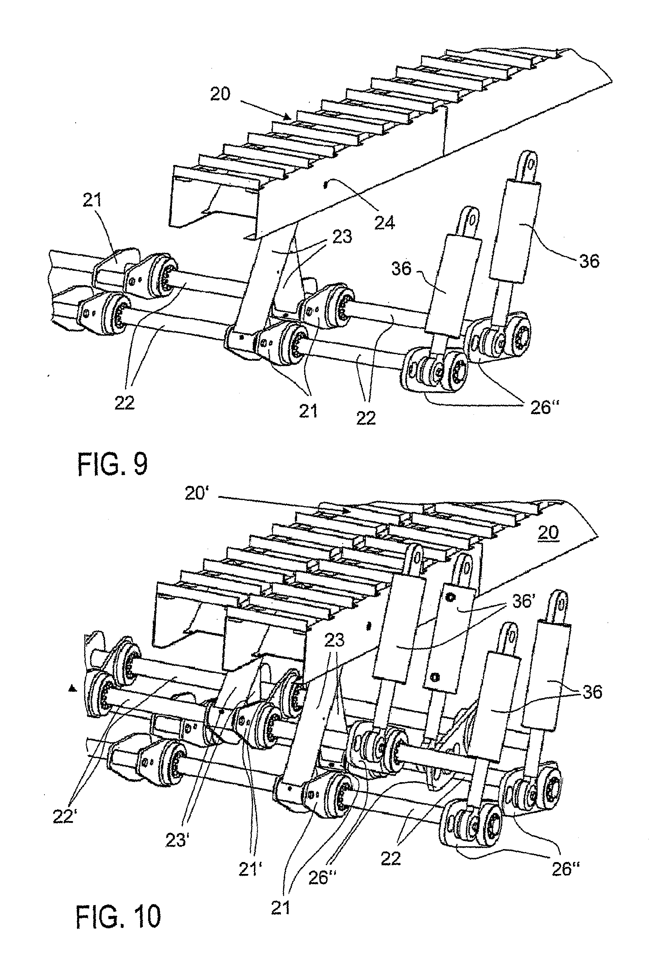

Anstelle eines Drehantriebs für die Antriebsanordnung des länglichen Schwingkörpers 20 oder mehrerer länglicher Schwingkörper 20 und 20' oder Schwingkörpergruppen kann ggf. auch ein Linearantrieb mit mehreren doppeltwirkenden, z.B. hydraulischen Arbeitszylindern 36 zur Anwendung kommen, wie dies in Fig. 9 bei einer Förderanlage mit mehreren gleichläufig angetriebenen Schwingkörpern 20 zu sehen ist. Da alle Schwingkörper 20 der Anlage synchron bewegt werden ist nur der rechte Schwingkörper 20 eingezeichnet. Der Schwingkörper 20 wird von den paarweise angeordneten Kurbelschwingen 21 bewegt, deren Schwenkbewegung mittels der Zwischenlenker 23 in bereits beschriebener Weise auf den Schwingkörper 20 übertragen wird. Die Kurbelschwingen 21 werden hierzu durch richtungsumkehrbaren Drehantrieb ihrer Kurbelwelle 22 im gleichen Richtungssinn in einem Winkelbereich von 1 bis nahezu 180 Grad hin- und her schwenkbewegt. Für den Drehantrieb der Kurbelwellen 22 ist an einem seitlich überstehenden Wellenende derselben jeweils eine Kurbelschwinge 26" drehfest angebracht, wobei der Neigungswinkel der Kurbelschwinge 26" etwa mit dem Neigungswinkel der anderen Kurbelschwingen 21 übereinstimmt. Am Hebelarm der beiden Kurbelschwingen 26" ist jeweils das Stangenende eines Arbeitszylinders 36 angelenkt, während das entgegengesetzte Zylinderende an einem nicht gezeigten Lagerbock des Gestells der Anlage gelagert ist. Beide Arbeitszylinder 36 sind in Reihe hintereinander angeordnet und nehmen nur wenig Bauraum ein. Werden die Arbeitszylinder 36 auf ihrer Kolbenseite mit Hydraulikflüssigkeit beaufschlagt, wird somit die Kolbenstange weiter ausgefahren und schwenkt dabei die Kurbelschwinge 26" im Uhrzeigergegensinn. Bei anschließender Beaufschlagung der Stangenseite der Arbeitszylinder 36 durch Hydraulikflüssigkeit wird die Kolbenstange wieder weiter in den Zylinder hineingezogen und schwenkt dabei die zugehörige Kurbelschwinge 26" im Uhrzeigersinn. Durch ständige Umschaltung des Fluidstroms in den beiden Arbeitszylindern 36 lässt sich somit durch die ständige Änderung der wirksamen Länge der Arbeitszylinder 36 durch entsprechende Beschaltung eine Hin- und Her-Schwenkbewegung der Kurbelschwingen 26" herbeiführen. Hierbei besteht auch die Möglichkeit, die Schwingbahn des Schwingkörpers 20 durch Änderung des eingestellten Kolbenhubs der Arbeitszylinder 36 zu modifizieren, wobei zur Änderung der Charakteristik der Antriebsanordnung auch ein deutlich unterschiedlicher Kolbenhub der beiden Zylinder 36 vorgesehen werden kann.

Wie im Zusammenhang mit Fig. 10 zu erkennen ist, lässt sich das Prinzip eines linearen Antriebs auch bei Anlagen anwenden, bei denen zwei Kurbelwellenpaare angetrieben werden müssen, sogar wenn diese Paare entsprechend Fig. 3 auf unterschiedlicher Höhe liegen. Die beiden Arbeitszylinder 36' sind in einer zweiten Reihe in einem seitlich Abstand neben den Arbeitszylindern 36 angeordnet, wobei sie entsprechend dem Versatz der oberen Kurbelwellen 22' gegenüber den unteren Kurbelwellen 22 verlagert sind. Durch entgegengesetztes Beschalten der bei den Arbeitszylinder 36 und der Arbeitszylinder 36' lässt sich auch der gegenläufige Schwingantrieb der Schwingkörper 20 und 20' erzeugen.

Eine Antriebsanordnung mit Linearantrieb zeichnet sich insbesondere auch dadurch aus, dass eine quasi stufenlose Verstellung des Schwingverhaltens der Anlage durch Änderung des Vorschubweges der Kolben in ihrem Zylinder möglich ist.

## Patentansprüche

1. Antriebsanordnung für einen länglichen Schwingkörper (20, 20'), der sich von mehreren drehangetriebenen Kurbelschwingen (21, 21') mit zueinander parallelen Drehachsen auf einer vorgebbaren Schwingbahn bewegen lässt, wobei die Kurbelschwingen (21, 21') gelenkig mit dem Schwingkörper (20, 20') gekoppelt sind,
**dadurch gekennzeichnet, dass**
die Kurbelschwingen (21, 21') zur Erzeugung einer nicht umlaufenden Schwingbewegung unter selbsttätiger Drehrichtungsumkehr über einen festgelegten Schwenkwinkel angetrieben sind, und dass zwei benachbarte Kurbelschwingen (21, 21') der Antriebsanordnung paarweise in einem Längenabschnitt des Schwingkörpers (20, 20') angeordnet und jeweils über einen Zwischenlenker (23, 23') mit einem gemeinsamen Lagerungsbereich des Schwingkörpers (20, 20') gekoppelt sind.

2. Antriebsanordnung nach Anspruch 1,
**dadurch gekennzeichnet, dass**
jeweils zwei mit einem Lagerungsbereich des Schwingkörpers (20, 20') gekoppelte Zwischenlenker (23, 23') in jeder Momentanstellung einen ausreichend großen Winkel einschließen, um einen Dreiecksverbund zu bilden.

3. Antriebsanordnung nach Anspruch 1 oder 2,
**dadurch gekennzeichnet, dass**
die geometrischen Drehachsen der am Schwingkörper (20, 20') gelagerten Enden der beiden Zwischenlenker (23, 23') im wesentlichen koaxial verlaufen.

4. Antriebsanordnung nach Anspruch 3,
**dadurch gekennzeichnet, dass**
die beiden Zwischenlenker (23, 23') über einen gemeinsamen Achsbolzen (24) mit dem Schwingkörper (20, 20') gekoppelt sind.

5. Antriebsanordnung nach einem der Ansprüche 1 bis 4,
**dadurch gekennzeichnet, dass**
der festgelegte Schwenkwinkel der Kurbelschwingen (21, 21') im Bereich von 1 bis etwas weniger als 180 Grad liegt, insbesondere im Bereich von 25 bis 45 Grad liegt und vorzugsweise ungefähr 30 Grad beträgt.

6. Antriebsanordnung nach einem der Ansprüche 1 bis 5,
**dadurch gekennzeichnet, dass**
die Antriebsanordnung einen weiteren Schwingkörper (20') umfasst, der seitlich neben dem ersten Schwingkörper (20) und relativbeweglich zu diesem angeordnet ist, und dass die Antriebsanordnung zwei weitere paarweise angeordnete Kurbelschwingen (21') umfasst, die benachbart zu den Kurbelschwingen (21) des ersten Schwingkörpers (20) angeordnet und jeweils über einen Zwischenlenker (23') mit einem gemeinsamen Lagerungsbereich des weiteren Schwingkörper (20') gekoppelt sind.

7. Antriebsanordnung nach Anspruch 6,
**dadurch gekennzeichnet, dass**
die Drehachsen der den benachbarten Schwingkörpern (20, 20') paarweise zugeordneten Kurbelschwingen (21, 21') jeweils in unterschiedlichen Höhenebenen angeordnet sind, wobei die Drehachsen der paarweise in verschiedenen Höhenebenen angeordneten Kurbelschwingen (21, 21') einen unterschiedlichen Abstand voneinander aufweisen oder auf einem Teilkreis angeordnet sind, dessen Mittelpunkt der Mittelpunkt einer Lochscheibe einer Exzenterwelle (29) ist.

8. Antriebsanordnung nach Anspruch 7,
**dadurch gekennzeichnet, dass**
die Zwischenlenker (23') der in der oberen Ebene angeordneten Kurbelschwingen (21') kürzer als die Zwischenlenker (23) der Kurbelschwingen (21) in der darunter liegenden Ebene sind.

9. Antriebsanordnung nach Anspruch 6,
**dadurch gekennzeichnet, dass**
die beiden Drehachsen der den Schwingkörpern (20) paarweise zugeordneten Kurbelschwingen (21) etwa auf gleicher Höhe liegen und in Längsrichtung der Schwingkörper (20) gesehen hintereinander angeordnet sind, wobei die Zwischenlenker (23) der hintereinander angeordneten Kurbelschwingen (21) eine übereinstimmende Länge aufweisen.

10. Antriebsanordnung nach einem der Ansprüche 1 bis 9,
**dadurch gekennzeichnet, dass**
in zwei Querebenen der Antriebsanordnung jeweils seitlich nebeneinander mehrere Kurbelschwingen (21, 21') koaxial angeordnet sind, die mit von ihnen anzutreibenden Schwingkörpern (20, 20') gekoppelt sind und dass die gleichsinnig zu bewegenden Kurbelschwingen (21, 21') in den beiden Querebenen jeweils zu einer durchgehenden Kurbelwelle (22, 22') miteinander verbunden sind, wobei zwei Gruppen von Schwingkörpern (20, 20') vorhanden sind, die sich gegenläufig antreiben lassen, wobei jeder Gruppe der Schwingkörper (20, 20') jeweils zwei synchron drehende Kurbelwellen (22, 22') zugeordnet sind, und wobei die Kurbelwellen (22, 22') der beiden Gruppen gegenläufig antriebsgesteuert sind.

11. Antriebsanordnung nach Anspruch 10,
**dadurch gekennzeichnet, dass**
zur gegenläufigen Antriebssteuerung der Kurbelwellen (22, 22') eine mechanische Zwangssteuerung über Exzentergetriebe (25, 25', 25") vorhanden ist, wobei die Exzentergetriebe (25, 25', 25") jeweils eine Exzenterwelle (29, 29', 29") umfassen, über deren Exzenterbolzen (28, 28', 28") jeweils zwei Steuerhebel (27, 27', 27") angelenkt sind, die jeweils über eine Kurbelschwinge (26, 26', 26") einen richtungsumkehrenden Drehantrieb der zugehörigen Kurbelwelle (22, 22') bewirken, wobei die Exzenterbolzen (28, 28', 28") auf entgegengesetzten Umfangsseiten der beiden Exzenterwellen (29, 29', 29") angeordnet und die zu einer Antriebsanordnung gehörenden Exzenterwellen (29, 29', 29") schlupffrei miteinander drehgekoppelt sind.

12. Antriebsanordnung nach Anspruch 11,
**dadurch gekennzeichnet, dass**
die Exzenterwellen (29, 29') der beiden Exzentergetriebe (25, 25') mit seitlichem Abstand koaxial nebeneinander angeordnet und drehfest miteinander verbunden sind, oder dass die Exzenterwellen (29") der Exzentergetriebe (25") in Längsrichtung des Schwingkörpers (20) gesehen mit Abstand hintereinander angeordnet sind, wobei die Exzenterwellen (29") der beiden Exzentergetriebe (25") mittels eines flexiblen Antriebselements (34) drehgekoppelt sind.

13. Antriebsanordnung nach einem der Ansprüche 1 bis 12,
**dadurch gekennzeichnet, dass**
die Hebelgeometrie der Steuerhebel (27, 27', 27") und Kurbelschwingen (26, 26', 26") der Exzentergetriebe (25, 25', 25") mit der Hebelgeometrie der von ihnen angetriebenen Kurbelschwingen (21, 21') und Zwischenlenker (23, 23') übereinstimmt.

14. Antriebsanordnung nach einem der Ansprüche 1 bis 13,
**dadurch gekennzeichnet, dass**
die Antriebsbewegung für die Kurbelschwingen (26, 26', 26") des Exzentergetriebes (25, 25', 25") mittels wenigstens eines rotierenden Antriebsmotors (35) erzeugt ist.

15. Antriebsanordnung nach einem der Ansprüche 1 bis 14,
**dadurch gekennzeichnet, dass**
die Antriebsbewegung für die beiden paarweise angeordneten Kurbelwellen (22, 22') über wenigstens zwei Linearantriebe (36, 36') erzeugt ist, deren Arbeitshub sich jeweils über eine Kurbelschwinge (26") in eine Drehbewegung der zugehörigen Kurbelwelle (22, 22') umwandeln lässt.
